# EUROPÄISCHE PATENTSCHRIFT

(11) **EP 2 378 166 B1**
(45) Veröffentlichungstag und Bekanntmachung des Hinweises auf die Patenterteilung: **18.06.2014**
(21) Anmeldenummer: 11001567.4
(22) Anmeldetag: 25.02.2011
(51) Int. Cl.: B60K 17/356, F16H 61/4043, F16H 61/456

(54) **Hydrostatischer Fahrantrieb**
Hydrostatic traction drive
Entraînement de roulement hydrostatique

(30) Priorität: 16.04.2010 DE 102010015498
(43) Veröffentlichungstag der Anmeldung: 19.10.2011
(73) Patentinhaber: Robert Bosch GmbH, 70442 Stuttgart (DE)
(72) Erfinder: Essig, Heinz-Gerhard, 89173 Lonsee (DE); Löwe, Peter, 88483 Burgrieden (DE)
(74) Vertreter: Thürer, Andreas

(56) Entgegenhaltungen:
- DE-A1-102006 058 802
- FR-A1- 2 719 001
- FR-A1- 2 828 544

## Beschreibung

Die Erfindung betrifft einen hydrostatischen Fahrantrieb gemäß dem Oberbegriff des Patentanspruches 1.

Derartige hydrostatische Fahrantriebe können allgemein bei Fahrzeugen, insbesondere jedoch bei landwirtschaftlichen Nutzfahrzeugen, wie Traktoren verwendet werden.

In der DE 10 2006 058 802 A1 ist ein hydrostatischer Fahrantrieb offenbart, bei dem mehrere Hydromotoren über eine gemeinsame Verstellpumpe mit Druckmittel versorgt sind. Im einfachsten Fall ist ein Hydromotor der Vorderachse und ein Hydromotor der Hinterachse zugeordnet, so dass bei Druckmittelversorgung beider Hydromotoren (Achsmotoren) Vor- und Hinterradachse angetrieben sind. Bei einem aufwendigeren Ausführungsbeispiel wird jedem Rad der Vorder- und Hinterachse jeweils ein Hydromotor (Radmotor) zugeordnet, von denen wiederum zwei in Reihe geschaltet sind, so dass bei einem Allradantrieb die linken bzw. die rechten Räder über zwei in Reihe geschaltete Hydromotoren angetrieben werden.

Im Druckmittelströmungspfad zwischen den beiden in Reihe geschalteten Hydromotoren ist ein Schaltventil angeordnet, das in eine Öffnungsstellung vorgespannt ist, in der eine Bypassleitung aufgesteuert ist, über die das Druckmittel vom Ablauf des stromaufwärtigen Hydromotors bei Umgehung des stromabwärtigen Hydromotors zur Niederdruckseite des Fahrantriebs zurückströmt, so dass entsprechend nur die dem stromaufwärtigen Hydromotor zugeordnete Achse angetrieben wird, während der stromabwärtige Hydromotor so zu sagen leer mitläuft, da er vom Fahrzeug "mit genommen" wird. Zum Umschalten dieses Zweiradantriebs auf Vierradantrieb wird das Schaltventil in eine Sperrstellung gebracht, in der die Bypassleitung zum Niederdruck abgesperrt ist, so dass auch der zweite Hydromotor mit Druckmittel versorgt wird.

Nachteilig bei dieser Lösung ist, dass das Umschalten von Zweirad- auf Vierradantrieb willkürlich erfolgt und somit von der Erfahrung des Fahrers abhängt.

In der DE 196 48 706 C2 ist ein hydrostatischer Fahrantrieb mit zwei Hydromotoren offenbart, die jeweils einem Rad einer Fahrzeugachse zugeordnet sind. Bei diesem hydrostatischen Fahrantrieb ist eine Ventileinrichtung vorgesehen, über die die beiden Hydromotoren in Reihe oder parallel geschaltet werden können. Bei einer Parallelschaltung sind beide Hydromotoren praktisch mit der gleichen Druckdifferenz beaufschlagt, so dass sich bei einer Kurvenfahrt ein interner Ausgleich der Durchflussmengen der beiden Hydromotoren ergibt. Bei einer Reihenschaltung kann es bei Kurvenfahrt durch die unterschiedlichen Drehzahlen zu Kavitationen kommen, allerdings ist in Reihenschaltung ein synchroner Lauf beider Hydromotoren eher gewährleistet. Eine Bypassleitung zur Umgehung eines der Hydromotoren ist bei diesem Fahrantrieb nicht vorgesehen.

Demgegenüber liegt der Erfindung die Aufgabe zugrunde, einen hydrostatischen Fahrantrieb zu schaffen, bei dem das Zuschalten des stromabwärtigen Hydromotors auf einfache Weise erfolgt.

Diese Aufgabe wird durch einen hydrostatischen Fahrantrieb mit den Merkmalen des Patentanspruches 1 gelöst.

Vorteilhafte Weiterbildungen der Erfindung sind Gegenstand der Unteransprüche.

Erfindungsgemäß hat der hydrostatische Fahrantrieb eine Verstellpumpe, über die zumindest zwei in Reihe geschaltete oder schaltbare Hydromotoren mit Druckmittel versorgt sind. In einem Druckmittelströmungspfad zwischen den Hydromotoren ist eine Ventileinrichtung vorgesehen, über die ein Druckmittelstrom bei Umgehung des stromabwärtigen Hydromotors zur Niederdruckseite geführt ist. Bei der erfindungsgemäßen Lösung ist diese Ventileinrichtung so ausgelegt, dass sie den Druckmittelstrom zur Niederdruckseite auf eine vorbestimmte Menge begrenzt. Diese Menge entspricht einem zugelassenen Schlupf am stromaufwärtigen Hydromotor. Wird dieser zugelassene Schlupf überschritten, so baut sich im Druckmittelströmungspfad zwischen den beiden Hydromotoren ein Druck auf, da über die Ventileinrichtung nicht mehr Druckmittel zur Niederdruckseite abströmen kann. Der stromabwärtige Hydromotor wird dann bei Überschreiten dieses zugelassenen Schlupfes mit Druckmittel versorgt, so dass der Vortrieb über die diesem Hydromotor zugeordnete Achse unterstützt wird. Sobald der Schlupf am stromaufwärtigen Hydromotor den Grenzwert unterschreitet, wird der stromabwärtige Hydromotor wieder selbsttätig "weg geschaltet". Erfindungsgemäß kann somit ein Umschalten zwischen einem Zweiradantrieb und einem Vierradantrieb ohne fehlerbehafteten willkürlichen Eingriff einer Bedienperson erfolgen, so dass die Betriebssicherheit des Fahrzeugs erheblich verbessert ist und die Zuschaltung des stromabwärtigen Hydromotors nur bei Bedarf erfolgt.

Die Ventileinrichtung ist vorzugsweise so ausgelegt, dass sie stets einen auf den Maximalwert begrenzten Druckmittelvolumenstrom zur Niederdruckseite zulässt, zur Minimierung von Druckmittelverlusten könnte dieser Druckmittelströmungspfad jedoch auch im Allradbetrieb gesperrt sein.

Bei einem Ausführungsbeispiel mündet in den Druckmittelströmungspfad zwischen den Hydromotoren eine mit einer Speisepumpe verbundene Speiseleitung ein, so dass ein Mindestdruck in diesem Bereich gewährleistet ist.

In dieser Speiseleitung ist ein in Richtung des Druckmittelströmungspfads öffnendes Rückschlagventil mit einer vergleichsweise schwachen Feder angeordnet.

Bei einer Variante der Erfindung ist die Ventileinrichtung mit einem Mengenbegrenzungsventil ausgeführt, das eine Messblende hat, der eine Druckwaage zugeordnet ist, die in Schließrichtung vom Druck stromaufwärts der Messblende und in Öffnungsrichtung von der Kraft einer Feder und dem Druck stromabwärts der Messblende beaufschlagt ist. Die Messblende ist der Druckwaage vorzugsweise vorgeschaltet.

Von der Speiseleitung kann stromabwärts des Rückschlagventils eine Bypassleitung abzweigen, die das Mengenbegrenzungsventil umgeht und in der ein Bypassventil angeordnet ist, das in Schließrichtung von der Kraft einer Feder und dem Druck stromabwärts des Mengenbegrenzungsventils und in Öffnungsrichtung vom Druck stromaufwärts des Mengenbegrenzungsventils beaufschlagt ist.

Bei einem Ausführungsbeispiel der Erfindung kann stromabwärts der Ventileinrichtung ein Niederdruckvorspannventil vorgesehen sein, das vorzugsweise als federvorgespanntes Rückschlagventil ausgeführt ist. Dabei wird es bevorzugt, wenn jeder Drehrichtung ein Niederdruck-Vorspannventil zugeordnet ist.

Bei einem Ausführungsbeispiel der Erfindung ist der Fahrantrieb mit vier Hydromotoren vorgesehen, von denen jeweils zwei, einer Achse zugeordnete Hydromotoren parallel angesteuert werden, während jeweils zwei, einer Vorder- und einer Hinterachse zugeordnete Hydromotoren in Reihe geschaltet sind.

Bei einer derartigen Lösung mit vier Fahrmotoren kann jeder Achse eine Ventileinrichtung mit den oben genannten Funktionen zugeordnet sein.

Bei einer Lösung kann jedem Hydromotor des Fahrantriebs ein motorspezifisches Auswahlventil zugeordnet sein, das die Niederdruckseite des jeweiligen Hydromotors mit einer Tankleitung verbindet. Dabei wird der zum Tank abströmende Druckmittelvolumenstrom über ein Mengenbegrenzungsventil auf einen Volumenstrom begrenzt, der dem zugelassenen Schlupf des stromaufwärtigen Hydromotors entspricht.

Zwischen dem Auswahlventil und dem Mengenbegrenzungsventil kann ein Druckhalteventil vorgesehen sein, das erst bei Überschreiten eines Mindestdrucks öffnet.

Wie bereits erwähnt, können das Mengenbegrenzungsventil und/oder das Auswahlventil in das Motorgehäuse integriert sein.

Bei einem Ausführungsbeispiel ist das Auswahlventil ein 3/3-Wegeventil, das in eine Sperrstellung vorgespannt ist.

Die Fahrantriebe können als verstellbare Hydromotoren ausgeführt sein.

Prinzipiell ist es auch möglich, zur Veränderung des zulässigen Schlupfes das Mengenbegrenzungsventil verstellbar auszuführen.

Bevorzuge Ausführungsbeispiele der Erfindung werden im Folgenden anhand schematischer Zeichnungen näher erläutert. Es zeigen:
Figur 1 einen Schaltplan eines erfindungsgemäßen hydrostatischen Fahrantriebs;
Figur 2 eine Ventileinrichtung des Fahrantriebs gemäß Figur 1 zur selbsttätigen Umschaltung von Zweirad- auf Vierradantrieb;
Figur 3 eine Variante des Ausführungsbeispiels gemäß Figur 1, wobei jeder Achse eine Ventileinrichtung zugeordnet ist;
Figur 4, eine vergrößerte Darstellung der Ventileinrichtungen aus Figur 3;
Figur 5 ein weiteres Ausführungsbeispiel eines hydrostatischen Fahrantriebs mit einem motorspezifischen Auswahlventil und
Figur 6 eine Detaildarstellung eines Ausführungsbeispiels eines Hydromotors mit Auswahlventil.

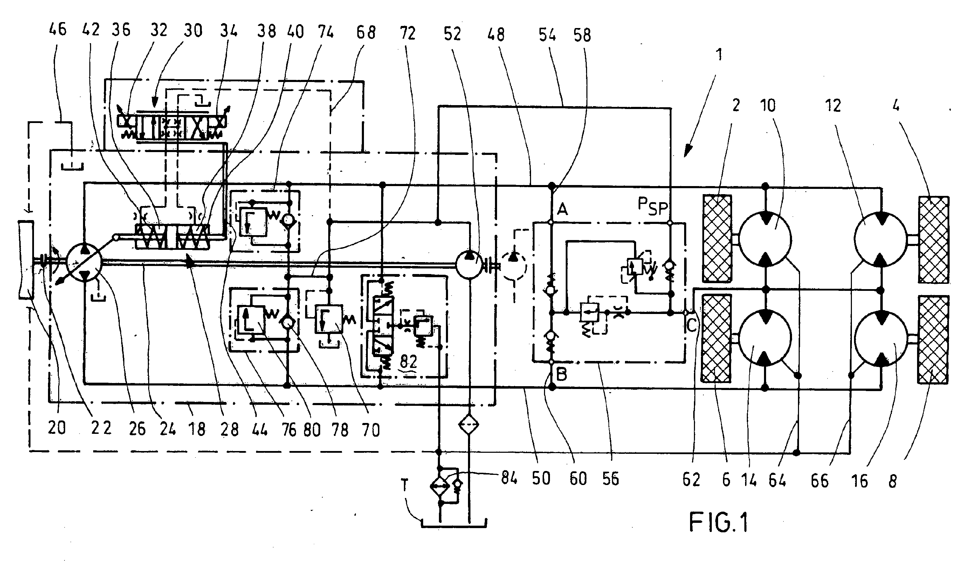

Figur 1 zeigt ein Schaltschema eines hydraulischen Fahrantriebs 1 eines landwirtschaftlichen Nutzfahrzeuges, beispielsweise eines Ackerschleppers. Dieser ist mit einem Allradantrieb ausgeführt, der je nach Betriebsbedingungen im Zweiradantriebs-oder Vierradantriebsmodus betreibbar ist. Bei dem dargestellten Ausführungsbeispiel sind den Rädern 2, 4 der Vorderachse und 6, 8 der Hinterachse jeweils ein Radmotor zugeordnet, die im Folgenden als Hydromotoren 10, 12 (bspw. Hinterachse) bzw. 14, 16 (bspw. Vorderachse) bezeichnet sind. Dabei sind jeweils zwei Hydromotoren 10, 14; 12, 16 jeder Achse in Reihe geschaltet, während die Hydromotoren einer Achse 10, 12; 14, 16 parallel geschaltet sind. Die Druckmittelversorgung der Hydromotoren 10, 12, 14, 16 erfolgt über eine Verstellpumpeneinheit 18, die durch den Motor des Ackerschleppers, in vorliegenden Fall einem Verbrennungsmotor 20 angetrieben ist. Eine Ausgangswelle des Verbrennungsmotors 20 ist über eine Kupplung 22 mit einer Antriebswelle 24 der Verstellpumpeneinheit 18 verbunden. Der Aufbau einer derartigen Verstellpumpeneinheit 18 ist aus dem Stand der Technik, beispielsweise aus dem Buch "Ölhydraulik", G. Bauer, 7. Auflage; B.G. Teubner Stuttgart 1998, Figuren 71, 72 bekannt, so dass hier nur die zum Verständnis der Erfindung erheblichen Bauelemente erläutert werden.

Eine derartige Verstellpumpeneinheit 18 hat eine über Null verschwenkbare Verstellpumpe 26, die beispielsweise als Axialkolbenpumpe ausgeführt sein kann, deren Schwenkwinkel über einen Stellzylinder 28 verstellbar ist. Dessen Einstellung erfolgt über ein elektrisch verstellbares, bspw. als Servoventil ausgeführtes Pumpenregelventil 30, das über zwei Proportionalmagneten 32, 34 aus einer Neutralposition heraus in eine Regelposition verstellbar ist, in der in zwei Steuerräume 36, 38 des Stellzylinders 28 eine Steuerdruckdifferenz einsteuerbar ist, über die der Kolben des Stellzylinders 28 aus- oder eingefahren wird, wobei diese Kolbenbewegung jeweils gegen die Kraft einer von zwei Rückführfedern 40, 42 erfolgt. Die Lage des Kolbens des Stellzylinders 28 wird über ein Rückführgestänge 44 zurück zum Pumpenregelventil 30 gemeldet. Die Stellbewegung des Stellzylinders 28 endet, wenn das auf das Rückführgestänge 44 wirkende Moment im Gleichgewicht mit dem durch den Steuerstrom für die Proportionalmagneten 32, 34 hervorgerufenen magnetischen Moment steht; das Regelventil 30 befindet sich dann wieder etwa in seiner Mittellage. Dadurch ist gewährleistet, dass jedem Steuerstrom (Ansteuerung der Proportionalmagneten 32, 34) eine Auslenkung des Stellzylinders 28 und damit ein Pumpenförderstrom zugeordnet ist. Weitere Einzelheiten dieser elektrohydraulischen Pumpenregelung sind dem eingangs genannten Stand der Technik zu entnehmen.

In der Verstellpumpeneinheit 18 entstehende Leckage wird über eine Leckageleitung 46 zu einem Tank T zurückgeführt.

Die über Null verschwenkbare Verstellpumpe 26 ist über zwei Leitungen mit der Hydromotorenanordnung 10, 12, 14, 16 verbunden, wobei im Folgenden angenommen sei, dass die Verstellpumpe 26 so eingestellt ist, dass das Druckmittel in eine in Figur 1 oben liegende Zulaufleitung 48 gefördert wird, die somit die Hochdruckleitung bildet, während das Druckmittel von den Hydromotoren über eine Ablaufleitung 50 (Niederdruckseite) zum Sauganschluss der Verstellpumpe 26 zurück strömt. Bei einem Verschwenken der Verstellpumpe 26 über Null wird die Druckmittelströmungsrichtung umgedreht, so dass die mit dem Bezugszeichen 50 versehene Leitung dann die Zulaufleitung und die mit dem Bezugszeichen 48 versehene Leitung die Ablaufleitung bildet.

Der Fahrantrieb 1 ist somit als geschlossener Kreislauf ausgeführt, wobei eventuelle Leckageverluste aus dem Tank T ausgeglichen werden können. Hierzu ist eine Speisepumpe 52 vorgesehen, die ebenfalls über die Antriebswelle 24 angetrieben ist. Über diese Speisepumpe 52 wird Druckmittel aus dem Tank T angesaugt und über eine Speiseleitung 54 in den Druckmittelströmungspfad zwischen die in Reihe geschalteten Hydromotoren 10, 14; 12, 16 eingespeist. Dazu ist die Speiseleitung 54 an einen Anschluss Pₛₚ einer Ventileinrichtung 56 angeschlossen, die später noch näher erläutert wird. Von der Zulaufleitung 48 und der Ablaufleitung 50 zweigen jeweils Leitungsabschnitte 58, 60 ab, die zu Anschlüssen A, B der Ventileinrichtung 56 führen. Der vorgenannte Druckmittelströmungspfad 62 im Bereich zwischen den in Reihe geschalteten Hydromotoren 10, 14; 12, 16 ist an einen Anschluss C der Ventileinrichtung angeschlossen. Dieser Druckmittelströmungspfad 62 verbindet die Leitungsabschnitte zwischen den jeweils in Reihe geschalteten Hydromotoren 10, 14; 12, 16 mit dem Anschluss C.

Eventuelle Leckagen der Hydromotoren 10, 12, 14, 16 werden über interne Leckageleitungen 64, 66 zum Tank T abgeleitet.

Wie in Figur 1 angedeutet, können zusätzlich zur Speisepumpe 52 noch weitere Speisepumpen zur Druckmittelversorgung weiterer Verbraucher oder zum Ausgleich von Leckagen vorgesehen sein. Über die Speisepumpe 52 wird in an sich bekannter Weise auch das Steueröl zum Verstellen des Stellzylinders 28 bereit gestellt. Hierzu zweigt von der Speiseleitung 54 eine Steuerleitung 68 ab, die zum Eingang des Pumpenregelventils 30 geführt ist. Der Druck in der Speiseleitung 54 ist über ein Druckbegrenzungsventil 70 begrenzt. Von der Speiseleitung 54 zweigt des Weiteren ein Speisekanal 72 ab, der zu den Leitungen 48, 50 verzweigt, wobei in jeder dieser Zweigleitungen eine Druckbegrenzungseinheit 74, 76 vorgesehen ist, die jeweils aus einem zur jeweiligen Leitung 48 bzw. 50 hin öffnenden Rückschlagventil 80 und einem den Druck in der jeweiligen Leitung 48, 50 begrenzenden Druckbegrenzungsventil 80 besteht, das in einer das jeweils zugeordnete Rückschlagventil 78 umgehenden Umgehungsleitung angeordnet ist. Zum Ausgleich einer Leckage kann somit über die Speisepumpe 52, einen Teil der Speiseleitung 54, den davon abzweigenden Speisekanal 72 und den zur jeweiligen Niederdruckseite abzweigenden Zweig und das darin angeordnete Rückschlagventil 78 Druckmittel in die Niederdruckseite eingespeist werden.

Der Grundaufbau eines derartigen Fahrantriebs ist aus dem eingangs genannten Stand der Technik, beispielsweise der DE 10 2006 058 802 A1 bekannt, so dass unter Verweis auf diese Anmeldung auf weitere Erläuterungen zum pumpnseitigen Teil des Fahrantriebs 1 erforderlich sind.

In Figur 1 ist noch eine Spülventileinheit 82 vorgesehen, über das Druckmittel aus dem jeweiligen Niederdruckzweig abgezweigt und über einen Filter 84 und ggf. einen Kühler zum Tank T abströmen und somit regeneriert werden kann. Das entnommene Druckmittel wird über die Speisepumpe 52 auf dem oben beschriebenen Weg ausgeglichen.

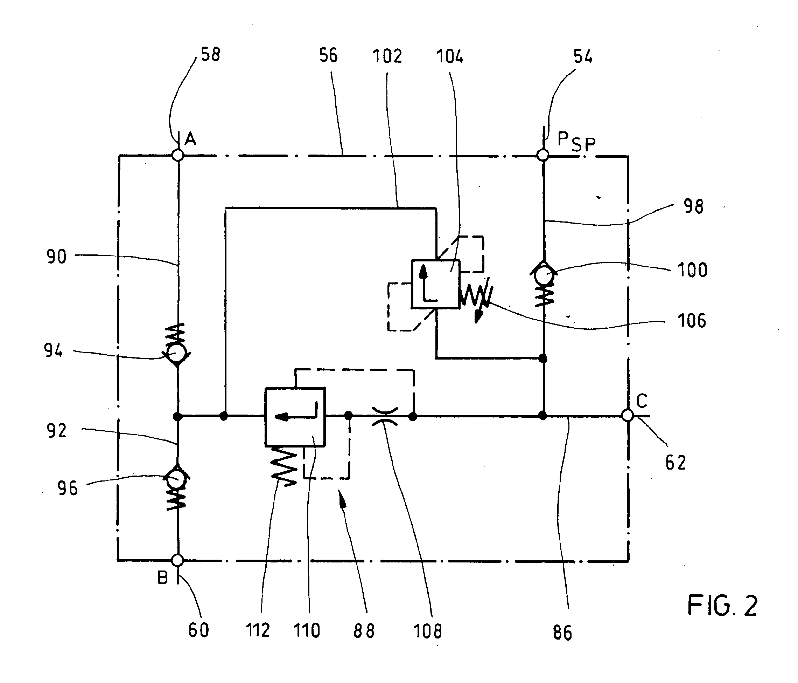

Anhand Figur 2 wird nunmehr die Ventileinrichtung 56 näher erläutert.

Figur 2 zeigt eine vergrößerte Einzeldarstellung der Ventileinrichtung 56 aus Figur 1.

Demgemäß mündet der Druckmittelströmungspfad 62 am Anschluss C in einen Bypassleitungsabschnitt 86, in dem ein Mengenbegrenzungsventil 88 angeordnet ist und der in eine Verzweigung einmündet, von der zwei Ablaufleitungsabschnitte 90, 92 zum Anschluss A bzw. B abgehen. In jedem dieser Leitungsabschnitte 90, 92 ist ein zum jeweiligen Anschluss A, B öffnendes Rückschlagventil 94, 96 angeordnet, das bei einem relativ hohen Druck, beispielsweise bei 14 bar öffnet und somit einen Druckmittelströmungspfad zum jeweiligen niederdruckseitigen Anschluss B oder A freigibt. Das jeweils andere Rückschlagventil wird durch den höheren Druck im Hochdruckzweig zugehalten.

Die Speiseleitung 54 geht am Anschluss Pₛₚ in einen Speiseleitungsabschnitt 98 mit einem Speiserückschlagventil 100 über. Dieses öffnet bei einem vergleichsweise geringen Druck von etwa 1 bar, so dass Druckmittel über die Speisepumpe 52, die Speiseleitung 54 und den Speiseleitungsabschnitt 98 sowie das sich öffnende Speiserückschlagventil 100 in den Bypassleitungsabschnitt 86 gespeist werden kann, so dass der Speisepumpendruck auch im Druckmittelströmungspfad 62 und somit im Bereich zwischen den beiden in Reihe geschalteten Pumpen 10, 14 und 12, 16 anliegt. Auf diese Weise ist gewährleistet, dass am jeweiligen Zulauf der stromabwärts gelegenen Hydromotoren, d.h. im vorliegenden Fall der Hydromotoren 14, 16 zumindest der Speisepumpendruck anliegen kann.

Stromabwärts des Speiserückschlagventils 100 zweigt vom Speiseleitungsabschnitt 98 eine Bypassleitung 102 ab, in der ein Bypassventil 104 angeordnet ist, das über eine Feder 106 in eine Schließstellung vorgespannt ist. In gleicher Richtung wirkt auch der Druck stromabwärts des Mengenbegrenzungsventils 88. In Öffnungsrichtung wirkt der Druck stromaufwärts des Mengenbegrenzungsventils 88. Demzufolge öffnet dieses Bypassventil 100, wenn die Druckdifferenz über dem Mengenbegrenzungsventil 88 gleich dem Druckäquivalent der Feder 106 ist. In diesem Fall kann dann Druckmittel über die Speisepumpe 52 am Mengenbegrenzungsventil 88 vorbei in den Bereich der oben genannten Verzweigung strömen.

Das Mengenbegrenzungsventil 88 ist beim dargestellten Ausführungsbeispiel als Stromregelventil ausgeführt, das den maximalen Druckmittelvolumenstrom zur Niederdruckseite begrenzt. Beim dargestellten Ausführungsbeispiel ist dieses Stromregelventil durch eine Messblende 108 und eine stromabwärts davon angeordnete Druckwaage 110 gebildet, die in Öffnungsrichtung von der Kraft einer Druckwaagenfeder 112 und dem Druck stromabwärts der Messblende 108 und in Schließrichtung vom Druck stromaufwärts der Messblende 108 beaufschlagt ist. Über diese Druckwaage 110 wird somit der Druckmittelvolumenstrom über die Messblende 108 begrenzt. D.h. je nach Einstellung diese Mengenbegrenzungsventils 88 strömt über den Druckmittelströmungspfad 62 Druckmittel vom Ablauf der stromaufwärts gelegenen Hydromotoren (hier 10, 12) zum Niederdruck ab, so dass sich im Zulauf zu den stromabwärts gelegenen Hydromotoren (hier 14, 16) kein Druck aufbauen kann. Demzufolge werden bei einem griffigen Untergrund (kein Schlupf) die beiden stromaufwärts gelegenen Hydromotoren 10, 12 und die entsprechenden Räder 2, 4 angetrieben, während die beiden stromabwärtigen Hydromotoren 14, 16 lediglich über das Fahrzeug "mitgenommen werden" und somit leer laufen. Die Drehzahl der Hydromotoren 10, 12, 14, 16 ist jedoch gleich. Der maximal zulässige Druckmittelvolumenstrom durch das Mengenbegrenzungsventil 88 ist so ausgelegt, dass sich bei einem gewissen Schlupf an den Rädern 2, 4 und den entsprechenden Hydromotoren 10, 12 durch die daraus resultierende Erhöhung der Drehzahl der Hydromotoren 10, 12 im Zulauf zu den beiden anderen Hydromotoren 14, 16 ein Druck aufbaut, so dass diese dann zugeschaltet werden und das Fahrzeug mit Allradantrieb fährt. D.h. durch entsprechende Auslegung des Mengenbegrenzungsventils 88 kann der zulässige Schlupf an den stromaufwärts gelegenen Hydromotoren 10, 12 bestimmt werden. Bei Überschreiten dieses Schlupfes werden dann die beiden anderen Hydromotoren zugeschaltet - ein Eingriff der Bedienperson ist nicht erforderlich, so dass die Fahrsicherheit und der Bedienkomfort ganz wesentlich verbessert sind.

Bei dem in Figur 1 dargestellten Ausführungsbeispiel ist der Fahrantrieb mit Radmotoren 10, 12, 14, 16 für jedes Rad 2, 4, 6, 8 ausgeführt. Prinzipiell ist die gleiche Schaltung auch bei einem Fahrantrieb mit Achsmotoren anwendbar, bei dem jeder Achse nur ein einziger Hydromotor zugeordnet ist. In diesem Fall sind dann entsprechend zwei Hydromotoren in Reihe geschaltet, eine Parallelschaltung erfolgt nicht.

Die vorbeschriebene Umschaltung von Zweiradantrieb zu Vierradantrieb erfolgt selbstverständlich auch bei Verschwenken der Verstellpumpe 26 über Null und der entsprechenden Fahrtrichtungsumkehr.

Prinzipiell kann man das Mengenbegrenzungsventil 88 auch verstellbar ausführen, so dass der zulässige Schlupf je nach Betriebsbedingungen oder Fahrtrichtung veränderbar ist.

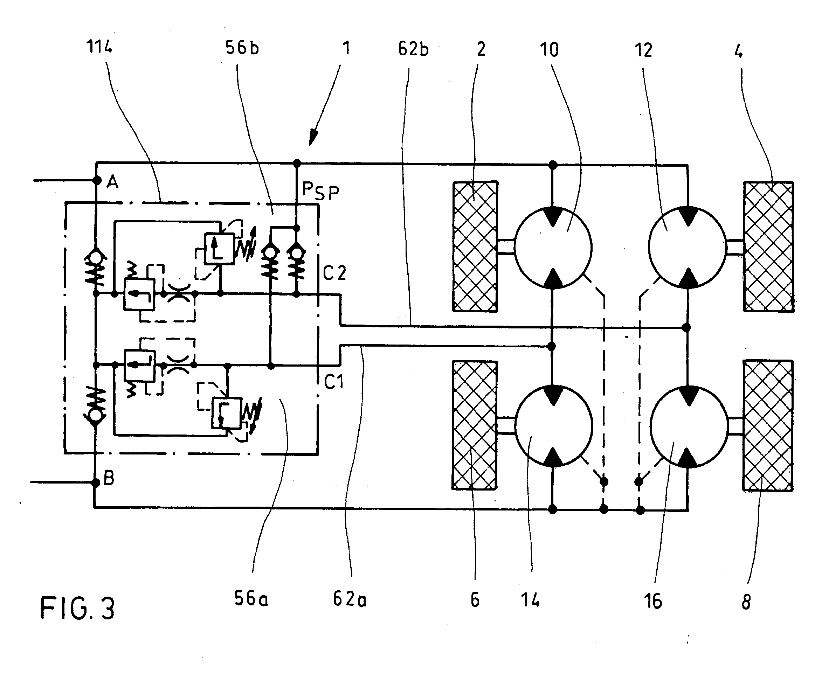

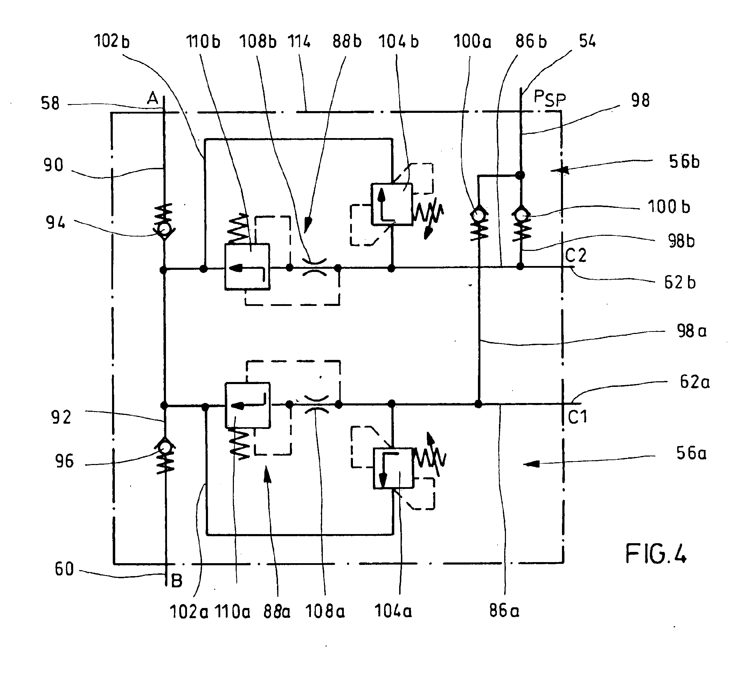

Figur 3 zeigt eine Variante des in Figur 1 dargestellten Ausführungsbeispiels, wobei lediglich der eigentliche Fahrantrieb 1 ohne die Pumpenanordnung dargestellt ist. Wie beim zuvor beschriebenen Ausführungsbeispiel ist der Fahrantrieb mit Radmotoren ausgeführt, wobei jedem der Räder 2, 4, 6, 8 jeweils ein Hydromotor 10, 12, 14, 16 zugeordnet ist. Die Hydromotoren 10, 14; 12, 16 einer Fahrzeugseite sind wiederum in Reihe geschaltet, wobei dem Hydromotorenpaar 10, 14 der in Figur 3 linken Fahrzeugseite eine erste Ventileinrichtung 56a und der anderen Hydromotorenpaarung 12, 16 eine zweite Ventileinrichtung 56b zugeordnet ist. Beide Ventileinrichtungen 56a, 56b sind zu einem Block 114 zusammengefasst. Dieser hat zwei Anschlüsse C1, C2, die über Bypassleitungsabschnitte 86a, 86b mit den Bereichen zwischen dem Ablauf der stromaufwärtigen Hydromotoren 10, 12 und dem Zulauf der stromabwärtigen Hydromotoren 14, 16 der jeweiligen Fahrantriebsseite verbunden sind. D.h. dass bei diesem Ausführungsbeispiel ist den in Reihe geschalteten Hydromotoren 10, 14 bzw. 12, 16 jeweils eine eigene Ventileinrichtung 56a, 56b zugeordnet ist. Diese werden anhand Figur 4 näher erläutert. Der Grundaufbau jeder Ventileinrichtung 56a, 56b entspricht demjenigen des vorbeschriebenen Ausführungsbeispiels, so dass hier nur die sich unterscheidenden Konstruktionsmerkmale erläutert werden. Dabei sind einander entsprechende Bauelemente mit den gleichen Bezugszeichen versehen.

Die beiden Druckmittelströmungspfade 62a, 62b münden im Bereich der Anschlüsse C1, C2 in Bypassleitungsabschnitte 86a, 86b ein, in denen - wie beim zuvor beschriebenen Ausführungsbeispiel - das jeweilige Mengenbegrenzungsventil 88a, 88b angeordnet ist. Die Bypassleitungsabschnitte 86a, 86b münden dann in die Ablaufleitungsabschnitte 90 bzw. 92 mit den jeweiligen Rückschlagventilen 94, 96 ein. Jedes Mengenbegrenzungsventil 88a, 88b kann bei geöffnetem Bypassventil104a, 104b in der jeweiligen Bypassleitung 102a, 102b umgangen werden.

Der Anschluss an die Speiseleitung 54 erfolgt wiederum über den Speiseleitungsabschnitt 98, der in zwei Zweigleitungen 98a, 98b verzweigt, wobei die Zweigleitung 98b in den Bypassleitungsabschnitt 86b und die Zweigleitung 98a in den Bypassleitungsabschnitt 86a einmündet. In diesen Abschnitten 98a, 98b ist das jeweilige Rückschlagventil 100a, 100b angeordnet, das - wie beim zuvor beschriebenen Ausführungsbeispiel - bei einem vergleichsweise geringen Druck von etwa 1 bar öffnet, so dass Druckmittel über die Speisepumpe 52 in den jeweiligen Zweig gefördert werden kann.

Diese Variante ermöglicht es, jeder Fahrzeugseite eine geeignete Mengenbegrenzungsventileinrichtung 88a, 88b mit der entsprechenden Schlupfbegrenzung des stromabwärtigen Motors zuzuordnen.

Im Übrigen entspricht das Ausführungsbeispiel gemäß den Figuren 3 und 4 sowohl im Hinblick auf den Aufbau als auch im Hinblick auf die Ausgestaltung dem vorbeschriebenen Ausführungsbeispiel, so dass weitere Erläuterungen entbehrlich sind.

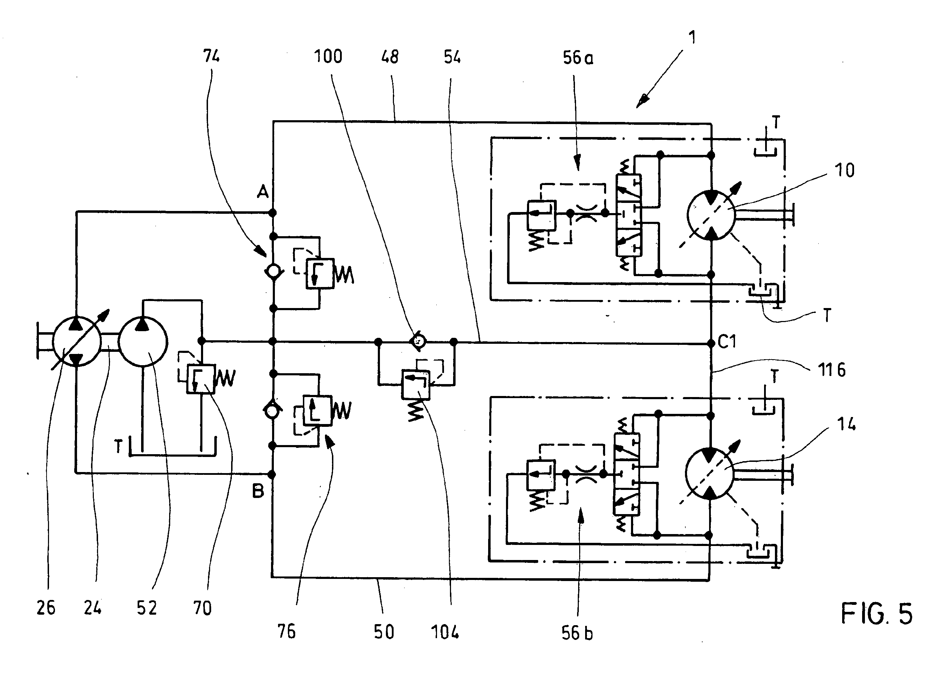

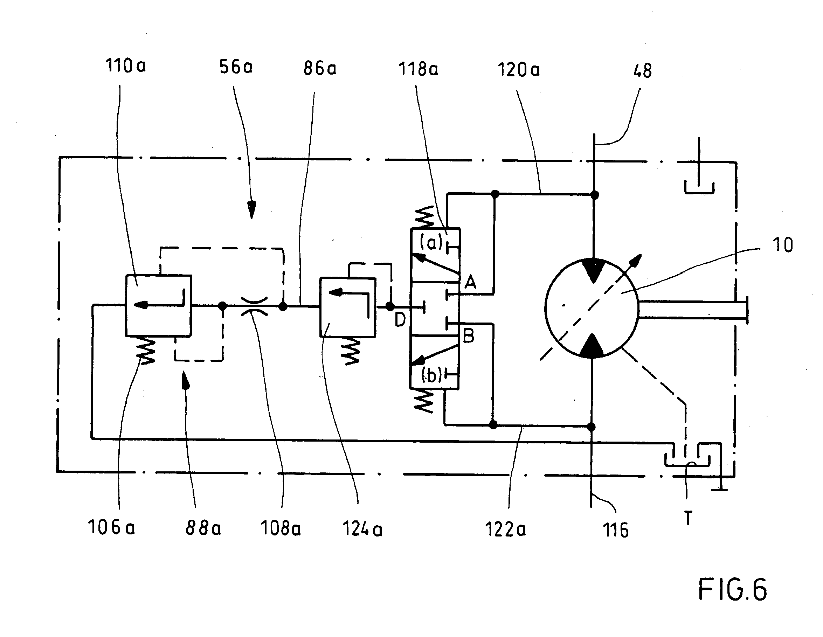

Anhand der Figuren 5 und 6 wird ein etwas anderes Konzept erläutert, um den Fahrantrieb selbsttätig von Zweiradantrieb auf Vierradantrieb umzusteuern.

Bei diesem Ausführungsbeispiel ist jeder Hydromotor 10, 14 mit einer motorspezifischen, in diesen integrierten Ventileinrichtung 56a, 56b ausgeführt, über die - ähnlich wie bei den zuvor beschriebenen Ausführungsbeispielen - Druckmittel stromabwärts des zuerst durchströmten Hydromotors (hier 10) zur Niederdruckseite, im vorliegenden Fall zu dem Tank T abströmen kann. Die Ventileinrichtungen 56a, 56b sind dabei jeweils in das Gehäuse des zugeordneten Hydromotors 10, 14 integriert. Dies ist in den Abbildungen gemäß den Figuren 5 und 6 mit der strichpunktierten Einrahmung gekennzeichnet.

Die sonstigen pumpenseitigen Bauelemente des Fahrantriebs 1 sind im Ausführungsbeispiel gemäß Figur 5 stark vereinfacht dargestellt, entsprechen jedoch im Hinblick auf die Funktion dem zuvor beschriebenen Ausführungsbeispiel. Auch bei dem in Figur 5 dargestellten Ausführungsbeispiel ist eine über Null verschwenkbare Verstellpumpe 26 vorgesehen, die mit der Speisepumpe 52 auf einer gemeinsamen Welle 24 sitzt. Die Verstellpumpe 26 fördert -je nach Einstellung - Druckmittel in die Zulaufleitung 48, die zum Zulauf des Hydromotors 10 führt. Beide Hydromotoren 10, 14 sind in Reihe geschaltet, wobei das vom stromabwärtigen Hydromotor (hier 14) abströmende Druckmittel über den Ablauf 50 und den Anschluss B zum Niederdruckanschluss der Verstellpumpe 26 strömt. In einer den Ablauf des Hydromotors 10 mit dem Zulauf des Hydromotors 14 verbindenden Leitung 116 mündet die Speiseleitung 54 ein, so dass am Zulauf des stromabwärtigen Hydromotors (hier 14) stets zumindest der Speisedruck anliegt. In dieser Speiseleitung 54 ist das Speiserückschlagventil 100 vorgesehen, dem ein Druckbegrenzungsventil zugeordnet ist, dessen Funktion etwa derjenigen des Bypassventils 104 in den Figuren 2 und 4 entspricht, so dass hier das gleiche Bezugszeichen 104 gewählt wird. Durch dieses Rückschlagventil 104 wird sichergestellt, dass der Druck stromabwärts des Rückschlagventils 100 nicht einen vorbestimmten Grenzwert überschreitet.

Der Maximaldruck der Speisepumpe 52 wird über das Druckbegrenzungsventil 70 begrenzt. Der jeweilige Maximaldruck in den Leitungen 48, 50 wird über die Druckbegrenzungseinheiten 74, 76 begrenzt, deren Aufbau und Funktion den entsprechenden Druckbegrenzungseinheiten gemäß Figur 1 entspricht.

Einzelheiten der motorspezifischen Ventileinrichtungen 56a, 56b werden anhand Figur 6 erläutert, in der eine Variante der Ventileinrichtung 56a vergrößert dargestellt ist. Die Ventileinrichtung 56b hat den gleichen Aufbau. Prinzipiell sind alle Radmotoren oder beide Achsmotoren mit einer derartigen Ventileinrichtung 56 ausgeführt. Der hier als Radmotor ausgeführte Hydromotor 10 kann - wie gestrichelt angedeutet - auch als verstellbarer Hydromotor ausgeführt sein. Dies gilt selbstverständlich auch für die anderen, vorbeschriebenen Ausführungsbeispiele.

Unter der Annahme, dass die Verstellpumpe 26 so eingestellt ist, dass das Druckmittel in die Zulaufleitung 48 gefördert wird, wird der Hydromotor 10 in der Darstellung gemäß Figur 6 von oben nach unten durchströmt. Parallel zum Hydromotor 10 ist ein Auswahlventil 118a vorgesehen, das als 3/2-Wegeventil ausgeführt und in eine Sperrstellung vorgespannt ist. Zwei Eingangsanschlüsse A, B sind über eine Vorlaufleitung 120a, 122a mit der Zulaufleitung 48 bzw. der Leitung 116 verbunden. Des Weiteren liegt der Druck in den Vorlaufleitungen 120a, 122a auch an den beiden Steuerflächen des 3/2-Wegeventils an, so dass der Druck in der Vorlaufleitung 120a in Richtung einer Schaltposition (a) und der Druck in der Vorlaufleitung 122a in Richtung einer Schaltposition (b) wirkt. Ein Ausgangsanschluss D dieses Auswahlventils 118a ist mit einer Leitung verbunden, die der Einfachheit halber ebenfalls als Bypassleitungsabschnitt 86a (siehe Figuren 2 und 4) bezeichnet wird. Dieser Bypassleitungsabschnitt 86a mündet nicht - wie bei den zuvor beschriebenen Ausführungsbeispielen - im Niederdruckzweig sondern in dem Tank T oder in einem Leckageanschluss des Gehäuses des Hydromotors 10. Durch dieses Auswahlventil 118a ist somit sichergestellt, dass der jeweils niedrigere Druck im Zulauf oder Ablauf des Hydromotors 10 im Bypassleitungsabschnitt 86a wirksam ist. Mit anderen Worten gesagt, über das Auswahlventil 118a wird jeweils die Niederdruckseite des zugeordneten Hydromotors mit dem Bypassleitungsabschnitt 86a verbunden.

Bei dem in Figur 6 dargestellten Ausführungsbeispiel ist in der Bypassleitung 86a - wie bei den zuvor beschriebenen Ausführungsbeispielen - ein Mengenbegrenzungsventil 88a vorgesehen, das den gleichen Aufbau wie bei den zuvor beschriebenen Ausführungsbeispielen haben kann. D.h. das Mengenbegrenzungsventil 88a hat eine Druckwaage 110a, der eine Messblende 108a vorgeschaltet ist und die in Öffnungsrichtung von der Kraft der Feder 106a und von dem Druck stromabwärts der Messblende 108a und in Schließrichtung von dem Druck stromaufwärts der Messblende 108a beaufschlagt ist.

Über dieses Stromregelventil wird der Druckmittelvolumenstrom von der Niederdruckseite des Hydromotors 10 zum Tank T konstant gehalten und auf einen vorbestimmten Maximalwert begrenzt.

Zwischen dem Auswahlventil 118a und dem Mengenbegrenzungsventil 88a ist beim dargestellten Ausführungsbeispiel ein Bypass-Druckbegrenzungsventil (Haltedruckventil) 124a angeordnet, das erst bei Überschreiten eines voreingestellten Grenzdrucks öffnet und die Strömung in Richtung des Mengenbegrenzungsventils 88a ermöglicht.

Prinzipiell kann dieses Bypass-Druckbegrenzungsventil 124a auch entfallen, dies ist im Schaltbild gemäß Figur 5 dargestellt.

Die anderen Hydromotoren (Radmotoren/Achsmotoren) des Fahrantriebs 1 sind mit einer entsprechenden Ventileinrichtung 56a versehen. Dadurch ist gewährleistet, dass der im Druckmittelströmungspfad stromaufwärts liegende Hydromotor 10 von dem über die Verstellpumpe 26a geförderten Druckmittel angetrieben wird. Der Ablauf dieses stromaufwärtigen Hydromotors 10 wird dann über das zugeordnete Auswahlventil 118a mit der Bypassleitung 86a verbunden und der zum Tank T abströmende Druckmittelvolumenstrom über das Mengenbegrenzungsventil 88a auf den voreingestellten Maximalwert begrenzt. Dieser zum Tank T abströmende Druckmittelvolumenstrom ist so ausgelegt, dass er einen bestimmten Schlupf des Hydromotors 10 zulässt. Bei Überschreiten dieses Schlupfes steigt die Druckmittelmenge am Ablauf des Hydromotors 10 an. Dieser Druckmittelvolumenstrom kann nicht mehr über das Mengenbegrenzungsventil 88a zum Tank T abströmen, so dass entsprechend in der Leitung 116a zum Zulauf des stromabwärtigen Hydromotors (hier Hydromotor 14) ein Druck aufgebaut wird, so dass dieser Hydromotor 14 praktisch zugeschaltet wird - das Fahrzeug fährt im Allradmodus. Der Schlupfanteil des ersten Motors ist durch den am Mengenbegrenzungsventil 88a eingestellten Druckmittelvolumenstrom definiert. Dementsprechend ist eine Drehmomentübertragung am nachgeschalteten Hydromotor 14 erst dann möglich, wenn dieser definierte Schlupfanteil am ersten Rad- bzw. am ersten Achsmotor auftritt.

Die vorstehenden erfindungsgemäßen Konzepte ermöglichen ein selbsttätiges Umsteuern zwischen Zweirad- und Allradantrieb, wobei im Druckmittelströmungspfad zwischen den in Reihe geschalteten Hydromotoren ein definierter Druckmittelvolumenstrom zur Niederdruckseite oder zum Tank hin abgezweigt wird. Dieser Druckmittelvolumenstrom entspricht einem vorbestimmten Schlupf des stromaufwärtigen Hydromotors. Bei Überschreiten dieses Schlupfes wird der nachgeschaltete Hydromotor mit Druckmittel versorgt und entsprechend selbsttätig auf Allradantrieb umgeschaltet.

Bei dem Ausführungsbeispiel gemäß den Figuren 5 und 6 kann durch geeignete Auslegung der Ventileinrichtungen 56a, 56b der Schlupf für Vorwärts- und Rückwärtsfahrt unterschiedlich ausgelegt werden.

Offenbart ist hydrostatischer Fahrantrieb mit zumindest zwei in Reihe geschalteten Hydromotoren, die über eine Verstellpumpe mit Druckmittel versorgt sind. Erfindungsgemäß wird im Druckmittelströmungspfad zwischen den beiden Hydromotoren ein vorbestimmter Druckmittelvolumenstrom abgezweigt. Bei Überschreiten eines gewissen Schlupfes am stromaufwärtigen Hydromotor schaltet sich der stromabwärtige Hydromotor selbsttätig zu.

## Patentansprüche

1. Hydrostatischer Fahrantrieb mit einer Verstellpumpe (26), über die zumindest zwei in Reihe geschaltete Hydromotoren (10, 12; 14, 16) mit Druckmittel versorgbar sind, wobei im Druckmittelströmungspfad (62, 116) zwischen den Hydromotoren (10, 14; 12, 16) eine Ventileinrichtung (56) vorgesehen ist, über die ein Druckmittelvolumenstrom bei Umgehung des stromabwärtigen Hydromotors (14, 16) zur Niederdruckseite oder zu einem Tank (T) geführt ist, **dadurch gekennzeichnet, dass** die Ventileinrichtung (56) so ausgelegt ist, dass sie den Druckmittelvolumenstrom auf einen Maximalwert begrenzt, der einem zugelassenen Schlupf am zugeordneten Hydromotor (10, 12) entspricht.

2. Fahrantrieb nach Patentanspruch 1, wobei die Ventileinrichtung (56) auch bei einer Druckmittelversorgung des stromabwärtigen Hydromotors (14, 16) durchströmt ist.

3. Fahrantrieb nach Patentanspruch 1 oder 2, wobei in den Druckmittelströmungspfad (62, 116) zwischen den Hydromotoren (10, 4; 12, 16) eine Speiseleitung (54) einmündet.

4. Fahrantrieb nach Patentanspruch 3, wobei in der Speiseleitung (54) ein in Richtung des Druckmittelströmungspfads (62, 116) öffnendes Speiserückschlagventil (100) mit vergleichsweise schwacher Feder vorgesehen ist.

5. Fahrantrieb nach einem der vorhergehenden Patentansprüche, wobei die Ventileinrichtung (56) ein Mengenbegrenzungsventil (88) mit einer Messblende (108) und einer zugeordneten Druckwaage (110) hat, die in Schließrichtung von einem Druck stromaufwärts der Messblende (108) und in Öffnungsrichtung von der Kraft einer Druckwaagenfeder (112) und dem Druck stromabwärts der Messblende (108) beaufschlagt ist.

6. Fahrantrieb nach Patentanspruch 4 und 5, wobei stromabwärts des Speiserückschlagventils (100) eine Bypassleitung (102) abzweigt, in der ein Bypassventil (104) angeordnet ist, das in Schließrichtung von der Kraft einer Feder (106) und dem Druck stromabwärts des Mengenbegrenzungsventils (88) und in Öffnungsrichtung vom Druck stromaufwärts des Mengenbegrenzungsventils (88) beaufschlagt ist.

7. Fahrantrieb nach Patentanspruch 6, wobei stromabwärts des Mengenbegrenzungsventils (88) ein als Niederdruckvorspannventil wirkendes Rückschlagventil (94, 96) vorgesehen ist.

8. Fahrantrieb nach einem der vorhergehenden Patentansprüche, wobei vier Hydromotoren (10, 12, 14, 16) jeweils einem Rad (2, 4, 6, 8) zugeordnet sind, wobei die Hydromotoren (10, 12) einer Achse parallel geschaltet und die einer Fahrzeugseite zugeordneten Hydromotoren (10, 14; 12, 16) in Reihe geschaltet sind.

9. Fahrantrieb nach einem der Patentansprüche 1 bis 7, wobei jeder Achse ein Hydromotor zugeordnet ist.

10. Fahrantrieb nach Patentanspruch 5, wobei jedem Hydromotor (10, 12, 14, 16) ein Auswahlventil (118) zugeordnet ist, das die Niederdruckseite des jeweiligen Hydromotors (10, 12, 14, 16) mit einem zur Niederdruckseite oder einem Tank (T) führenden Bypassleitungsabschnitt (86) verbindet, wobei in diesem das Mengenbegrenzungsventil (88) angeordnet ist.

11. Fahrantrieb nach Patentanspruch 10, wobei zwischen Mengenbegrenzungsventil (88) und Auswahlventil (118) ein Bypass-Druckbegrenzungsventil (124) vorgesehen ist, das bei Überschreiten eines Mindestdrucks öffnet.

12. Fahrantrieb nach Patentanspruch 10 oder 11, wobei das Auswahlventil (118) in ein Motorgehäuse des zugeordneten Hydromotors (10, 12, 14, 16) integriert ist.

13. Fahrantrieb nach einem der Patentansprüche 10 bis 12, wobei das Auswahlventil (118) ein 3/3-Wegeventil ist, das in eine Sperrposition vorgespannt ist.

14. Fahrantrieb nach einem der vorhergehenden Patentansprüche, wobei die Hydromotoren (10, 12, 14, 16) verstellbar sind.

15. Fahrantrieb nach einem der Patentansprüche 5 bis 14, wobei das Mengenbegrenzungsventil (88) verstellbar ist.

## Claims

1. Hydrostatic traction drive having a variable displacement pump (26), via which at least two hydraulic motors (10, 12; 14, 16) which are connected in series can be supplied with pressure medium, a valve device (56) being provided in the pressure-medium flow path (62, 116) between the hydraulic motors (10, 14; 12, 16), via which valve device (56) a pressure-medium volumetric flow is guided to the low pressure side or to a tank (T) while bypassing the downstream hydraulic motor (14, 16), **characterized in that** the valve device (56) is designed in such a way that it limits the pressure-medium volumetric flow to a maximum value which corresponds to a permitted slip at the associated hydraulic motor (10, 12).

2. Traction drive according to Patent Claim 1, the valve device (56) also being flowed through in the case of a supply of pressure medium to the downstream hydraulic motor (14, 16).

3. Traction drive according to Patent Claim 1 or 2, a feed line (54) opening into the pressure-medium flow path (62, 116) between the hydraulic motors (10, 14; 12, 16).

4. Traction drive according to Patent Claim 3, a feed non-return valve (100) which opens in the direction of the pressure-medium flow path (62, 116) and has a comparatively weak spring being provided in the feed line (54).

5. Traction drive according to one of the preceding patent claims, the valve device (56) having a quantity limiting valve (88) with a measuring diaphragm (108) and an associated pressure compensator (110) which is loaded in the closing direction by a pressure upstream of the measuring diaphragm (108) and in the opening direction by the force of a pressure compensator spring (112) and the pressure downstream of the measuring diaphragm (108).

6. Traction drive according to Patent Claims 4 and 5, a bypass line (102) branching off downstream of the feed non-return valve (100), in which bypass line (102) a bypass valve (104) is arranged which is loaded in the closing direction by the force of a spring (106) and the pressure downstream of the quantity limiting valve (88) and in the opening direction by the pressure upstream of the quantity limiting valve (88).

7. Traction drive according to Patent Claim 6, a non-return valve (94, 96) which acts as a low-pressure prestressing valve being provided downstream of the quantity limiting valve (88).

8. Traction drive according to one of the preceding patent claims, four hydraulic motors (10, 12, 14, 16) being assigned to in each case one wheel (2, 4, 6, 8), the hydraulic motors (10, 12) of one axle being connected in parallel and the hydraulic motors (10, 14; 12, 16) which are assigned to one vehicle side being connected in series.

9. Traction drive according to one of Patent Claims 1 to 7, each axle being assigned one hydraulic motor.

10. Traction drive according to Patent Claim 5, each hydraulic motor (10, 12, 14, 16) being assigned a selection valve (118) which connects the low pressure side of the respective hydraulic motor (10, 12, 14, 16) to a bypass line section (86) which leads to the low pressure side or a tank (T), the quantity limiting valve (88) being arranged in the said bypass line section (86).

11. Traction drive according to Patent Claim 10, a bypass pressure limiting valve (124) which opens if a minimum pressure is exceeded being provided between the quantity limiting valve (88) and the selection valve (118) .

12. Traction drive according to Patent Claim 10 or 11, the selection valve (118) being integrated into a motor housing of the associated hydraulic motor (10, 12, 14, 16).

13. Traction drive according to one of Patent Claims 10 to 12, the selection valve (118) being a 3/3-way valve which is prestressed into a shut position.

14. Traction drive according to one of the preceding patent claims, the hydraulic motors (10, 12, 14, 16) being adjustable.

15. Traction drive according to one of Patent Claims 5 to 14, the quantity limiting valve (88) being adjustable.

## Revendications

1. Système d'entraînement hydrostatique comprenant une pompe à cylindrée variable (26), par le biais de laquelle au moins deux moteurs hydrauliques (10, 12 ; 14, 16) montés en série peuvent être alimentés en fluide sous pression, un dispositif de soupape (56) étant prévu dans le chemin d'écoulement de fluide sous pression (62, 116) entre les moteurs hydrauliques (10, 14 ; 12, 16), par le biais duquel dispositif de soupape un flux volumique de fluide sous pression est guidé jusqu'au côté basse pression ou jusqu'à un réservoir (T) en cas de contournement du moteur hydraulique (14, 16) situé en aval, **caractérisé en ce que** le dispositif de soupape (56) est conçu de telle sorte qu'il limite le flux volumique de fluide sous pression à une valeur maximale qui correspond à un glissement admissible du moteur hydraulique associé (10, 12).

2. Système d'entraînement selon la revendication 1, dans lequel le dispositif de soupape (56) est également traversé en cas d'alimentation en fluide sous pression du moteur hydraulique (14, 16) situé en aval.

3. Système d'entraînement selon la revendication 1 ou 2, dans lequel une conduite d'alimentation (54) débouche dans le chemin d'écoulement de fluide sous pression (62, 116) entre les moteurs hydrauliques (10, 14 ; 12, 16).

4. Système d'entraînement selon la revendication 3, dans lequel une soupape de non-retour d'alimentation (100) s'ouvrant en direction du chemin d'écoulement de fluide sous pression (62, 116) et comprenant un ressort relativement faible est prévue dans la conduite d'alimentation (54).

5. Système d'entraînement selon l'une quelconque des revendications précédentes, dans lequel le dispositif de soupape (56) comporte une soupape de limitation de quantité (88) pourvue d'un diaphragme de mesure (108) et d'une balance de pression (110) associée qui est sollicitée, dans le sens de fermeture, par une pression en amont du diaphragme de mesure (108) et, dans le sens d'ouverture, par la force d'un ressort de balance de pression (112) et la pression en aval du diaphragme de mesure (108).

6. Système d'entraînement selon les revendications 4 et 5, dans lequel une conduite de dérivation (102) bifurque en aval de la soupape de non-retour d'alimentation (100), dans laquelle conduite de dérivation est disposée une soupape de dérivation (104) qui est sollicitée, dans le sens de fermeture, par la force d'un ressort (106) et la pression en aval de la soupape de limitation de quantité (88) et, dans le sens d'ouverture, par la pression en amont de la soupape de limitation de quantité (88).

7. Système d'entraînement selon la revendication 6, dans lequel il est prévu, en aval de la soupape de limitation de quantité (88), une soupape de non-retour (94, 96) agissant en tant que soupape de précontrainte basse pression.

8. Système d'entraînement selon l'une quelconque des revendications précédentes, dans lequel quatre moteurs hydrauliques (10, 12, 14, 16) sont respectivement associés à une roue (2, 4, 6, 8), et dans lequel les moteurs hydrauliques (10, 12) d'un essieu sont montés en parallèle et les moteurs hydrauliques (10, 14 ; 12, 16) associés à un côté du véhicule sont montés en série.

9. Système d'entraînement selon l'une quelconque des revendications 1 à 7, dans lequel un moteur hydraulique est associé à chaque essieu.

10. Système d'entraînement selon la revendication 5, dans lequel une soupape de sélection (118) est associée à chaque moteur hydraulique (10, 12, 14, 16), laquelle soupape de sélection raccorde le côté basse pression du moteur hydraulique (10, 12, 14, 16) respectif à une section de conduite de dérivation (86) menant jusqu'au côté basse pression ou à un réservoir (T), et dans lequel la soupape de limitation de quantité (88) est disposée dans cette section de conduite de dérivation.

11. Système d'entraînement selon la revendication 10, dans lequel une soupape de limitation de pression de dérivation (124) est prévue entre la soupape de limitation de quantité (88) et la soupape de sélection (118), laquelle soupape de limitation de pression de dérivation s'ouvre en cas de dépassement d'une pression minimale.

12. Système d'entraînement selon la revendication 10 ou 11, dans lequel la soupape de sélection (118) est intégrée dans un carter de moteur du moteur hydraulique associé (10, 12, 14, 16).

13. Système d'entraînement selon l'une quelconque des revendications 10 à 12, dans lequel la soupape de sélection (118) est une soupape à 3/3 voies qui est précontrainte dans une position de blocage.

14. Système d'entraînement selon l'une quelconque des revendications précédentes, dans lequel les moteurs hydrauliques (10, 12, 14, 16) sont réglables.

15. Système d'entraînement selon l'une quelconque des revendications 5 à 14, dans lequel la soupape de limitation de quantité (88) est réglable.
